Europäisches Patentamt

European Patent Office

Office européen des brevets

⑩

(11) Publication number: **0 085 068**
**B1**

## (12) EUROPEAN PATENT SPECIFICATION

(45) Date of publication of patent specification: **06.11.85**

(21) Application number: **82902266.4**

(22) Date of filing: **29.07.82**

(86) International application number:
**PCT/NO82/00042**

(87) International publication number:
**WO 83/00416 17.02.83 Gazette 83/05**

(51) Int. Cl.⁴: **A 01 K 97/00**

(54) AN APPARATUS FOR HOOKING OF A FISHING LINE.

(30) Priority: **05.08.81 NO 812658**

(43) Date of publication of application:
**10.08.83 Bulletin 83/32**

(45) Publication of the grant of the patent:
**06.11.85 Bulletin 85/45**

(84) Designated Contracting States:
**BE FR GB NL**

(56) References cited:
**NO-B- 139 843**
**NO-B- 143 045**

(73) Proprietor: **BJÖRSHOL, Kolbjörn**
**N-6560 Langöyneset (NO)**

(72) Inventor: **BJÖRSHOL, Kolbjörn**
**N-6560 Langöyneset (NO)**

(74) Representative: **Warren, Anthony Robert et al**
**BARON & WARREN 18 South End Kensington**
**London W8 5BU (GB)**

Courier Press, Leamington Spa, England.

## Description

In long-line fishing, a line is used which is provided with a great number of hooks, each connected to the line through a snood. In use, each hook is to be provided with a bait, and when the line is not in use care must be taken that the line with its snoods, to the greatest possible extent, are prevented from being tangled or knotted. Consequently, it has been a common practice of the Norwegian fishing fleet to store the line without mounted hooks, the connection between each hook and its snood, and the baiting of the individual hooks, being effected during the setting of the line, the hooks being disconnected from their snoods during the hauling of the line.

As mentioned, the number of hooks associated with a single line is very great. Consequently, it is of the greatest importance to reduce the time and the work involved in the individual hooking and the individual baiting.

The present invention relates to an apparatus which primarily is adapted for hooking a fishing line which is provided with snoods situated at a distance from each other along the length of the line, each snood being provided with a head which is adapted to receive and releasably hold the neck of a fishing hook.

The characteristic feature of the apparatus consists therein that it comprises a turnable disc mounting at least one combination of devices, which devices are mutually radially distributed relative to the turning axis of the disc, the or each such combination comprising at least one hook store, means adapted to transitorily receive a snood head, and a slide member, the apparatus further including an arrangement for guiding individual snood heads to the snood head receiving device, the slide member being adapted to move radially under the control of eccentric guide means, when the disc is turned relative to the snood head guide arrangement, to move a fishing hook leg from the hook store into a snood head.

During rotation of the disc, hooking, and possibly also baiting, is effected without any necessity of manual activity. It is possible to provide the apparatus with a plurality of combinations or sets of devices, so making it possible, during one complete revolution of the disc, to perform a plurality of hooking and baiting operations.

In order that the invention may be more readily understood, reference will now be made to the accompanying drawings.

The accompanying drawings illustrate schematically how an apparatus embodying the invention may be designed. It is to be noted that although the drawings show the arrangement of one set of devices which move through four "stations" for the performance of the various operations as mentioned, it is obvious that the number of sets may be varied according to conditions, and possibly may be made far more numerous, such as equal to 10 or 12. The drawings illustrate an apparatus which is also adapted for baiting.

In the accompanying drawings:—

Figure 1 is a vertical sectional view as seen at right angles to the line I—I in Figure 2, through such part of the apparatus in which the snoods and their heads are aligned;

Figure 2 is a horizontal sectional view of the apparatus as seen along the line II—II in Figure 1;

Figure 3 is a view of part of the apparatus as seen in the direction of the arrow III in Figure 1;

Figure 4 is a view as seen in the direction of the arrow IV in Figure 3;

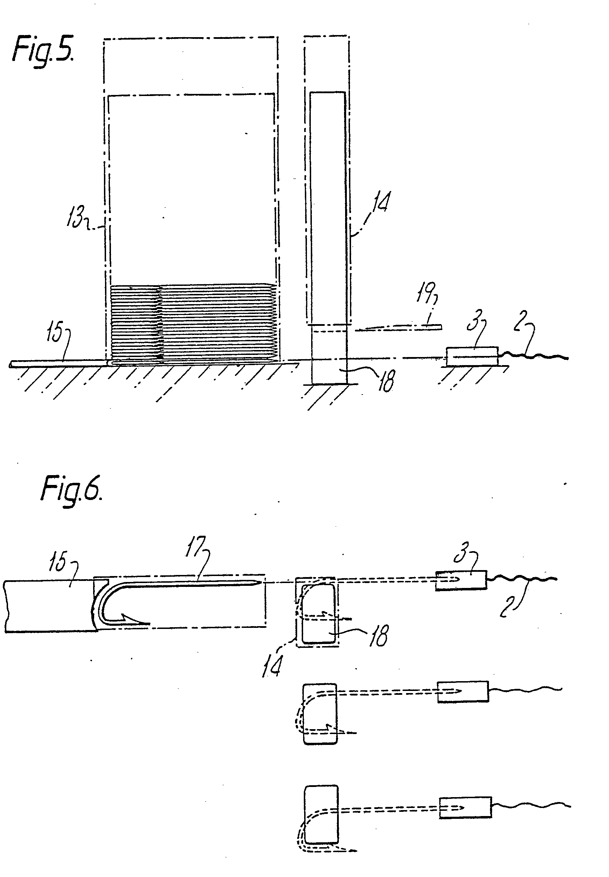

Figure 5 is a view as seen in the direction of the arrow V in Figure 2; and

Figure 6 is a plan view corresponding to that of Figure 5.

The apparatus illustrated in the accompanying drawings is adapted for hooking and baiting of a line 1 with snoods 2, each provided with a head 3 adapted to receive and releasably hold the neck of the fishing hook. The line 1 with its snoods 2 and snood head 3 is assumed to be stored in a tub or bin 4.

The apparatus comprises a snood head guide arrangement including a guide passage 5 which is provided with a driven line advancing wheel 6 and is provided with a longitudinally extending slot 7, so that the snood heads are passed along the passage 5 while the snoods protrude through the slot 7. The passage 5 extends obliquely in a conical surface having its axis extending through the center of the wheel 6, so that the individual snoods which protrude through the slot 7 will be in spaced arrangement in the said conical surface.

From the wheel 6, the line 1 runs downwardly and is caught by an advancing wheel 8 which may be a laminated brush or, preferably, a rubber wheel provided with a spring-loaded board for the purpose of enhancing the frictional engagement between the line 1 and the wheel 8. Through the tension in the line 1 created by the wheel 8, the snoods which protrude through the passage slot 7 are tightened, thereby running over a curved cylindrical surface 9 in the form of loops 10.

At its lower end the passage 5 meets snood head receiving means comprising a catch member 11 which is secured to a rotatable disc 12 and is adapted to hold a snood head 3 stationary during the rotation of the disc 12. Further, the disc 12 carries a hook store 13 and a bait store 14 as well as a slide member 15 which is adapted to slide radially on the disc 12 under the control of a circular guide 16 which is eccentrically mounted relatively to the axis of the disc 12. The slide member 15 is adapted to pass under the hook store 13 and, during its movement radially outwards, carry along a hook 17 from the store 13 and then pass the hook neck through the lower part of the bait in the store 14. Further, a knife 19 is stationarily mounted in the apparatus, which knife cuts off a part of the bait 18 through which part the hook neck is passed.

The position of the bait store 14 may be so adjusted that the hook neck 17 enters the bait 18 in different positions along the circumference of the disc 12, in order thereby to achieve different positionings of the bait on the hook neck (Figure 6).

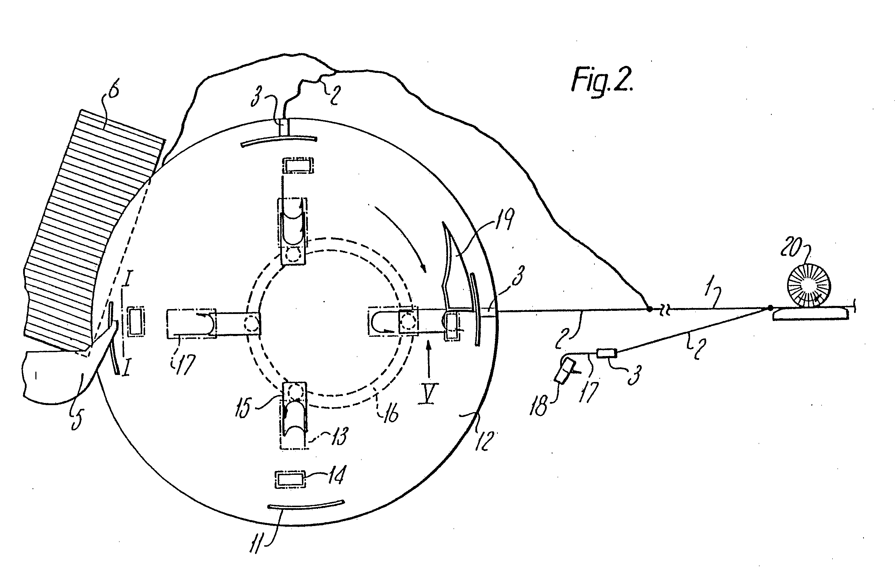

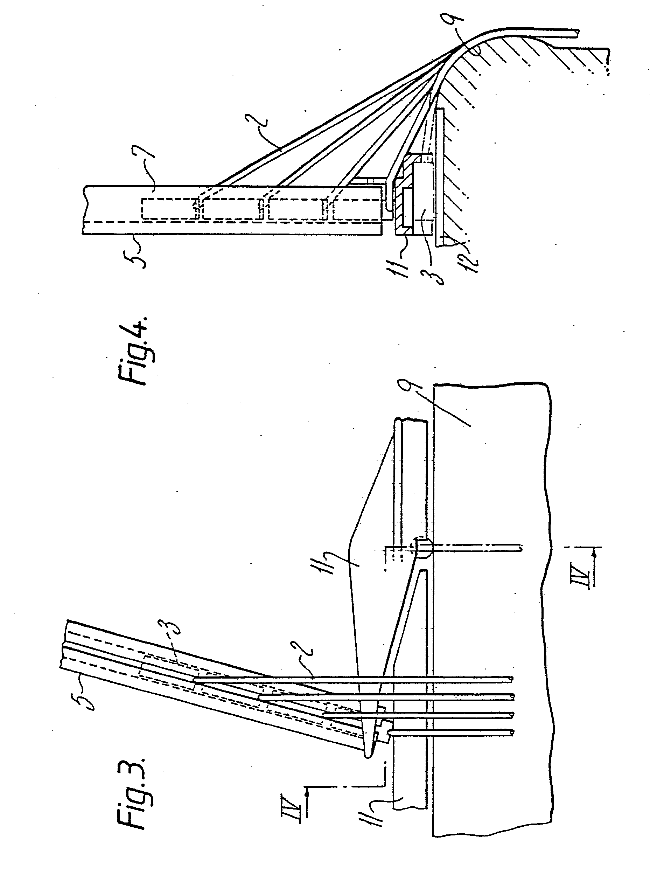

Figure 2 shows the devices 11 to 18 in four positions, with the slide member 15 in the different radial positions which it may occupy during the rotation of the disc 12. In order to increase the number of hooking and baiting operations per revolution of the disc, more sets of devices may be mounted on the disc, each of which sets performs its series of operations during one revolution of the disc. The distance between the individual snoods distributed along the curved wall (Figure 3) then corresponds to the distance between the device sets along the circumference of the disc 12. When more sets of devices are used, the members 11 will follow each other more or less closely and may form a ring.

In the embodiment shown in the accompanying drawings the apparatus operates in the following manner:

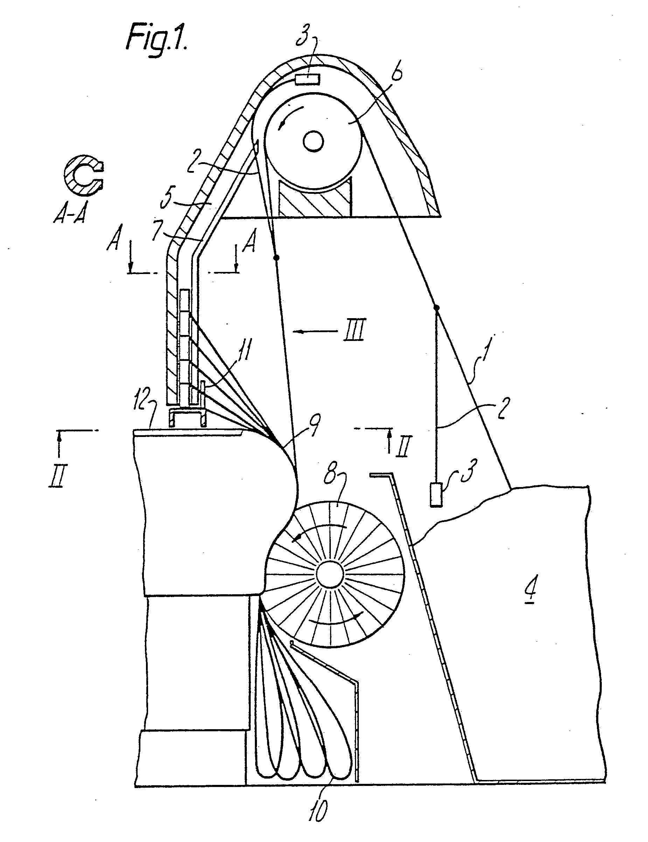

The line 1 is drawn from the bin 4 over the wheel 6 by means of the wheel 8, and the snood heads 3 are drawn downwardly into the passage 5 with the snoods 2 protruding through the slot 7. Due to the oblique position of the passage 5, see Figures 1 and 3, the snoods 2 protrude through the slot 7 in spaced relationship and in this position they are kept taut over the curved wall 9 by means of the wheel 8.

At the lower end of the passage 5 the snood head is caught by a catch member 11 mounted in the edge of the rotatable disc 12 and in radial alignment with the hook store 13, the bait store 14 and the slide member 15. The disc 12 is now in a (O degrees) position with the devices as indicated to the left in Figure 2 with the end of the slide member close to the inner end of the hook store 13. Further clockwise rotation of the disc 12 will cause the slide member 15 to move radially outwardly under the control of the guide 16 until, when the devices occupy the top (90 degrees) position shown in Figure 2, a hook 17 is pushed outwardly until the end of the hook neck engages the bait 18 in the store 14. Further rotation of the disc 12 displaces the devices of the right hand (180 degrees) position in Figure 2, in which the hook neck is passed through the bait and has arrived at the inlet to the snood head 3. At the same time the devices have passed the stationary knife 19 which cuts the bait 18 at a suitable, adjustable height above the disc 12. The slide member 15 now begins to move radially inwardly (see the lower part of Figure 2), and thereby liberates the outlets from the stores 13 and 14, so that all parts are again ready for action, to the left in Figure 2, and the snood head 3 with the bait and mounted hook 17 are withdrawn by a pull in the line 1 by means of a pull wheel 20, see the right hand side of Figure 2.

From the wheel 20, the line 1, fully hooked and baited, is passed over the ship's rail.

## Claims

1. An apparatus for hooking a fishing line (1) which is provided with snoods (2) situated at a distance from each other along the length of the line, each snood (2) being provided with a head (3) which is adapted to receive and releasably hold the neck (17) of a fishing hook, characterised in that it comprises a turnable disc (12) mounting at least one combination of devices, which devices are mutually radially distributed relative to the turning axis of the disc (12), the or each such combination comprising at least one hook store (13), means (11) adapted to transitorily receive a snood head (3), and a slide member (15), the apparatus further including an arrangement (5) for guiding individual snood heads (3) to the snood head receiving device (11), the slide member (15) being adapted to be moved radially under the control of eccentric guide means (16), when the disc (12) is turned relative to the snood head guide arrangement (5), to move a fishing hook leg (17) from the hook store (13) into a snood head (3).

2. An apparatus as claimed in claim 1, wherein the or each radial combination of devices (13, 11, 15) also comprises a bait store (14) situated adjacent to the slide member (15) in the path of the hook (17) when passing from the hook store (13) to the snood head receiving means (11).

3. An apparatus as claimed in claim 1 or 2, wherein the arrangement for guiding the individual snood heads (3) to the receiving means (11) comprises a passage (5) which is provided with a slot (7) through which the individual snoods (2) may protrude in spaced relationship, as well as a forwarding wheel (8) adapted to tighten the snoods (2).

4. An apparatus as claimed in claim 1, 2 or 3 which includes a plurality of radial rows of devices (13, 11, 15) the snood head guide means being operable to guide successive individual snoods heads (3) to the receiving means (11) associated with successive rows of devices.

## Revendications

1. Appareil pour fixer des hameçons sur une ligne de pêche (1) qui est pourvue d'avançons (2) situés à une certain distance l'un de l'autre le long de la ligne, chaque avançon (2) étant pourvu d'une tête (3) qui peut recevoir et retenir de manière détachable la hampe (17) d'un hameçon de pêche, caractérisé en ce qu'il comprend un disque tournant (12) montant au moins une combinaison de dispositifs, ces dispositifs étant mutuellement répartis dans le sens radial par rapport à l'axe de rotation du disque (12), la combinaison ou chacune d'elle comprenant au moins un magasin à hameçons (13), un dispositif (11) propre à recevoir passagèrement une tête d'avançon (3) et un coulisseau (15), l'appareil comprenant, en outre, un système (5) pour guider des têtes d'avançons (3) individuelles vers le dispositif récepteur (11) de têtes d'avançons, le coulisseau (15) pouvant être déplacé radialement sous la commande d'un élément de guidage excentrique (16), lorsque de disque (12) tourne par rapport au système de guidage de têtes d'avançons (5) pour déplacer une hampe (17) d'hameçon de pêche à partir du magasin à hameçons (13) dans une tête d'avançon (3).

2. Appareil suivant la revendication 1, dans lequel la combinaison radiale de dispositifs (13, 11, 15) ou chacune d'elle comprend aussi un magasin à amorces (14) situé près du coulisseau (15) dans le chemin de l'hameçon (17) lorsqu'il passe du magasin à hameçons (13) dans le dispositif récepteur de têtes d'avançons (11).

3. Appareil suivant la revendication 1 ou 2, dans lequel le systéme servant à guider les têtes d'avançons (3) individuelles vers le dispositif récepteur (11) comprend un passage (5) qui est pourvu d'une fente (7) par laquelle les avançons (2) individuels peuvent s'étendre tout en restant espacés ainsi qu'une roue d'avancement (8) propre à serrer ou tendre les avançons (2).

4. Appareil suivant la revendication 1, 2 ou 3, qui comprend plusieurs rangées radiales de dispositifs (13, 11, 15), le dispositif de guidage de têtes d'avançons pouvant intervenir pour guider des têtes d'avançons individuelles successives (3) vers le dispositif récepteur (11) associé à des rangées de dispositifs successives.

**Patentansprüche**

1. Gerät zum Anbringen von Haken an einer Angelschnur (1), die in Abständen voneinander Vorfächer (2) aufweist, die mit einem Kopfstück (3) versehen sind, welches der Aufnahme und lösbaren Halterung des Halses (17) eines Fischhakens dient, dadurch gekennzeichnet, daß das Gerät aus einer drehbaren Scheibe (12) besteht, auf der zumindest eine Kombination von Vorrichtungen angeordnet ist, und die Vorrichtungen abwechselnd aufeinanderfolgend radial zur Drehachse der Scheibe (12) auf dieser verteilt angeordnet sind, wobei die Kombination oder jede dieser Kombinationen mindestens aus einem Haken-Magazin (13), einer Anordnung (11) für die vorübergehende Aufnahme eines Vorfach-Kopfstücks (3) und einem Gleitelement (15) besteht, und die Einrichtung ferner eine Anordnung (5) für die Führung der einzelnen Vorfach-Kopfstücke (3) zur Kopfstück-Aufnahmevorrichtung einschließt, wobei das Gleitelement (15) durch ein exzentrisches Führungselement (16) gesteuert eine radial verlaufende Bewegung ausführt, wenn die Scheibe (12) relativ zur Vorfach-Kopfstück-Führung (5) gedreht wird, um damit einen Fischaken-Hals (17) vom Haken-Magazin (13) in ein Vorfach-Kopfstück (3) hinein zu bewegen.

2. Gerät nach Anspruch 1, dadurch gekennzeichnet, daß die oder jede radiale Kombination der Vorrichtungen (113, 11, 15) auch ein Magazin (14) für die Köder aufweist, welches angrenzend dem Gleitelement (15) im Bewegungspfad des Hakens (17) angeordnet ist, wenn dieser vom Haken-Magazin (13) zur Vorfach-Kopfstück-Aufnahme (11) dieses passiert.

3. Gerät nach Anspruch 1 oder 2, dadurch gekennzeichnet, daß die Anordnung für die Führung der einzelnen Vorfach-Kopfstücke (3) zur Aufnahmevorrichtung (11) aus einem Fürhungs-Durchzug (5) besteht, der einen Schlitz (7) aufweist, durch den die einzelnen Vorfächer (2) im Abstand voneinander herausragen, sowie einem Vortriebsrad (8) für die Straffung der Vorfächer (2).

4. Gerät nach Anspruch 1, 2 oder 3, gekennzeichnet, durch eine Mehrzahl radial angeordneter Reihen von Vorrichtungen (13, 11, 15), wobei die Vorfach-Kopfstück-Führungen für die Führung der nacheinanderfolgenden einzelnen Vorfach-Kopfstücke (3) zu den einzelnen aufeinanderfolgenden Reihen von den Vorrichtungen zugeordneten Aufnahmen (11) ausgelegt sind.

Fig.1.

Fig.2.

0 085 068

Fig.3.

Fig.4.

*Fig. 5.*

*Fig. 6.*